# EUROPEAN PATENT APPLICATION

(11) **EP 1 657 645 A1**
(43) Date of publication of application: **17.05.2006**
(21) Application number: 04771744.2
(22) Date of filing: 17.08.2004
(51) Int. Cl.: G06F 12/14, G06F 1/00, G06F 3/06

(54) **ELECTRONIC DATA MANAGEMENT DEVICE, CONTROL PROGRAM, AND DATA MANAGEMENT METHOD**

(30) Priority: 18.08.2003 JP 2003294056
(71) Applicant: Science Park Corporation, Zama-shi, Kanagawa 228-0024 (JP)
(72) Inventor: Shoji, Koichiro, c/o Science Park Corporation, Zama-shi, Kanagawa 228-0024 (JP); Nozaki, Takashi, c/o Science Park Corporation, Zama-shi Kanagawa 228-0024 (JP)
(74) Representative: Steinmeister, Helmut
(86) International application number: PCT/JP2004/011783
(87) International publication number: WO 2005/017758

(57) **Abstract**

An electronic data management apparatus is provided storing a control program that is automatically installed in an electronic computer when the apparatus is connected thereto and that can control data in the computer. The electronic data management apparatus 1 has a first memory 6 storing user data, an authentication database 11 having identification data registered therein, an input section 3 for entering authentication information about a user, an authentication module 12 that performs authentication of the user by comparing data entered from the input section 3 with the identification data registered in the authentication database 11, a USB connector 4 connected to an electronic computer to transmit and receive the data, and a second memory 7 storing a control program. After user authentication, the control program is installed in the computer, and a switch 10 switches from the second memory 7 to the first memory 6, thereby enabling the user data to be read from the computer.

## Description

### Technical Field:

The present invention relates to an electronic data management apparatus that stores and manages users' data and also relates to a control program for use with the electronic data management apparatus, and a data management method. More particularly, the present invention relates to an electronic data management apparatus used in connection with an electronic computer and also relates to a control program for use with the electronic data management apparatus and a data management method. Even more particularly, the present invention relates to an electronic data management apparatus that performs personal authentication by using biometrics information, personal identification numbers, keys, etc. to permit access to data stored in memory. The present invention also relates to a control program for use with such an electronic data management apparatus and a data management method.

### Background Art:

User authentication is performed when a user makes access to a computer. The user authentication includes password authentication performed based on each individual's user name and password entered from a keyboard, and biometrics authentication that utilizes biometrics information such as the human fingerprint, hand shape, voice print, face and iris. User authentication can also be performed at the time of using a peripheral device used in connection with a computer.

It is particularly important to perform user authentication from the security point of view when access is made to an external storage device. There have heretofore been computer systems having a lock code number or a keyed lock provided for the computer main unit, the peripheral device power supply, the casing, etc. Only a user who knows the lock code number or has the key can use the computer.

Many kinds of storage media are used as external storage devices. Typical storage media are hard disks, MOs, and DVD-RAMs. These storage media are high-capacity media capable of storing gigabytes or more of data. Recently, a wide variety of flash memories have been developed and spread remarkably as storage media. Flash memories such as Compact Flash (registered trademark), SmartMedia (registered trademark), and Memory Stick (registered trademark) are storage media with a capacity of several to several tens of gigabytes.

Users record data on these external storage media to reproduce the recorded data or continue working in other places, and also use the external storage media to transfer data to other people as the occasion demands. A device that reproduces data recorded on such external storage media and records data thereon is connected to a computer through an interface, e.g. a USB (Universal Serial Bus), to transmit and receive the recorded data and the data to be recorded.

OS's (Operating Systems), e.g. Windows Me (registered trademark), Windows 2000 (registered trademark), and Windows XP (registered trademark), which are products from Microsoft Corporation (registered trademark), automatically recognize a device connected to the computer by utilizing the PnP (Plug and Play) function. The device that reproduces recorded data on the above-described external storage media and records data thereon is also automatically recognized by the OS utilizing the PnP function.

When a device is connected to the computer through a USB interface, the PnP function of the OS automatically recognizes the device and installs the necessary driver or displays driver installation instructions on the display screen to prompt the user to install the driver according to the instructions, thereby providing an environment that allows the connected device to be used on the computer. Thus, the user reads the recorded data from the connected external storage device or writes data to the external storage device.

There is an example in which storage media are provided with fingerprint authentication information, which is one of biometrics information, to perform authentication at the time of using the computer. For example, "Portable recording medium and method of using the portable recording medium" disclosed in Patent Document 1 provides a CD-RW storing application software, a user authentication program, a fingerprint authentication engine, user fingerprint information, etc. to perform user authentication by fingerprint collation and to permit use of the application software after the authentication.
Patent Document 1: United States Patent Application Laid-Open No. US 2001014883 Al-2001-08-16, "Portable recording medium and method of using portable recording medium".

### Disclosure of the Invention:

### Problem to be Solved by the Invention:

There are cases where a user records user data on a flash memory or the like and transports the memory to use the recorded data by reading it with another computer or transfers the memory to another person to let him or her use the recorded data. In general, however, the user data is important to the user. The user does not want the user data to remain in the computer, not to mention allowing the user data to be transferred to a third party as it is. For example, when the user asks a printing shop to print the user data, such as character and picture information, it is common practice for the user to provide the print data in a medium, e.g. a flexible disk or a CD-ROM. Even if the printing shop returns the medium to the ordering party after printing by using the print data, the print data remains in the computer of the printing shop. This is unfavorable for the user from the security point of view.

With the above-described technical background, the present invention was made to attain the following objects.
An object of the present invention is to provide an electronic data management apparatus storing a control program that is automatically installed to be used in an electronic computer when the apparatus is connected thereto and that can control data in the computer, and also provide the above-described control program and an electronic data management method.
Another object of the present invention is provide an electronic data management apparatus used in connection with an electronic computer and storing a control program capable of erasing data transmitted to the computer or data processed in the computer, created files, etc. when the apparatus is disconnected from the computer, and also provide the above-described control program and an electronic data management method.

Still another object of the present invention is to provide an electronic data management apparatus used in connection with an electronic computer and storing a control program capable of automatically disappearing or becoming disabled when the apparatus is disconnected from the computer, and also provide the above-described control program and an electronic data management method.
A further object of the present invention is to provide an electronic data management apparatus having a personal authentication function, and also provide a control program for use with the apparatus and an electronic data management method.

### Means for Solving the Problem:

To attain the above-described objects, the present invention adopts the following means.
An electronic data management apparatus (1, 20, 30) according to a first aspect of the present invention has data storing means (6) storing data, identification data storing means (11) having identification data for authentication registered therein, input means (3, 21, 31, 32) for entering authentication information about a user, authentication means (12) performing authentication of the user by comparing data entered from the input means (3, 21, 31, 32) with the identification data registered in the identification data storing means (11), interface means (9) connected to an electronic computer to transmit and receive the data, and program storing means (7) storing a control program.

Preferably, the electronic data management apparatus (1, 20, 30) permits access to the data when the entered data and the identification data match each other as a result of the authentication. After the user has been authenticated by the authentication means (12), the control program is installed in the computer to enable reading the data from the computer.

Preferably, after the authentication by the authentication means (12) has been completed, the electronic data management apparatus (1, 20, 30) is unlocked, and the computer connected thereto is allowed to start automatic identification of the electronic data management apparatus (1, 20, 30).
Preferably, the electronic data management apparatus has switch control means (10) switching between the data storing means (6) and the program storing means (7).

Preferably, writing to the data storing means (6) can be performed from the computer, and a history of operation performed on the computer using the data or a history of operating the computer is written to the data storing means (6). Preferably, the identification data is fingerprint data. Fingerprint information about the user is entered from the input means (3), and the authentication means (12) performs fingerprint authentication of the user.

Preferably, the identification data is a registered personal identification number. A personal identification number is entered from the input means (21). The authentication means (12) authenticates the user by comparing the personal identification number with the registered personal identification number. Preferably, the authentication means (12) has a lock (32) and a key (31), so that the user having the key (31) is permitted to access the data.

A control program for use with an electronic data management apparatus according to a second aspect of the present invention is a control program recorded in an electronic data management apparatus (1, 20, 30). The electronic data management apparatus (1, 20, 30) has a program storing area (7) for storing the control program. After the above-described authentication has been performed, the control program is installed in the computer. The program instructs the computer to operate so that when an operation is performed on the computer by using the data, a history of the operation is stored.

Preferably, the electronic data management apparatus (1, 20, 30) has an authentication information storing area (11) that stores registered authentication information, an input section (3, 21, 31, 32) for entering identification information about a user, an authentication section (12) having the function of performing authentication of the user by comparing the authentication information and the identification information with each other, and a data storing area (6) that stores data. When the electronic data management apparatus is connected to an electronic computer, the authentication section (12) performs the authentication of the user. Upon completion of the authentication, the user is permitted to access the data storing area (6).

Preferably, the control program for use with an electronic data management apparatus deletes the data transmitted into the computer when the electronic data management apparatus is disconnected from the computer. Preferably, the control program incorporates an automatic disappearance program having the function of causing the control program to disappear automatically when the electronic data management apparatus (1, 20, 30) is disconnected from the computer. Preferably, the control program has the function of becoming disabled from operating in the computer.

Preferably, the control program has a history obtaining function of obtaining at least one history selected from histories of duplicating, deleting, editing, viewing, reading and writing the data on the computer, or a history of files or new data created by using the data, a data recording function of writing the history to the data storing area (6), and a transmission function of transmitting the history to another electronic computer by using communication means.

Preferably, the history is a history of operating from input means of the computer. The history is preferably an input history of entry from a keyboard of the computer or a mouse operation history. Preferably, the control program limits a file system of the computer so as to permit performing only at least one operation selected from duplicating, deleting, editing, viewing, reading and writing the data on the computer by a specific application program or arbitrarily. Preferably, the control program for use with an electronic data management apparatus runs in a kernel mode in which all instructions of an OS of the computer are executable.

A data management method according to a third aspect of the present invention uses an electronic data management apparatus (1, 20, 30). The electronic data management apparatus has an authentication information storing section (11) that stores authentication information, an input section (3, 21, 31, 32) for entering authentication information about a user, an authentication section (12) that performs authentication of the user by using data from the input section (3, 21, 31, 32), and a data storing section (6) that stores data. When the electronic data management apparatus is connected to an electronic computer, the authentication section (12) performs the authentication of the user, and the user having the authentication information matching the authentication information registered in the authentication information storing section (11) is permitted to access the data. The electronic data management apparatus (1, 20, 30) has a program storing section (7) that stores a control program. Upon completion of the authentication, the control program is installed in the computer to ensure a use environment in which the data is used in the computer.

Preferably, the use environment is a limitation that permits access to the data only from a specific application program that runs on the computer.
Preferably, the control program has the function of leaving a history of operating input means of the computer, or a history of access to the data in at least one operation selected from duplicating, deleting, editing, viewing, reading and writing operations using the data, or a history of files or new data created by using the data.

Preferably, when the electronic data management apparatus (1, 20, 30) is disconnected from the computer, the control program deletes at least one of the data in the computer, duplicates of the data, and data or files created by using the data. Preferably, the control program has the function of automatically disappearing. Preferably, the control program has the function of becoming disabled from operating in the computer.

### Advantageous Effects of the Invention:

The present invention offers the following advantageous effects.
The present invention provides an electronic data management apparatus storing a control program. The control program is installed in an electronic computer to which the electronic data management apparatus is connected. The control program supervises operations using user data on the computer and controls an application program running on the computer to prevent the user data from being used for purposes that the user does not intend.

In addition, the present invention provides an electronic data management apparatus storing a control program capable of deleting user data and files created by using the user data after an operation using the user data has been performed on an electronic computer. Thus, it becomes possible to improve security for user data leakage prevention and so forth. Further, provision of an electronic data management apparatus having a personal authentication function makes it possible to limit the use of user data only to authorized purposes and hence possible to improve security.

### Best Mode for Carrying Out the Invention:

The best embodiments of the present invention will be described below specifically with reference to the accompanying drawings.

### [First Embodiment]

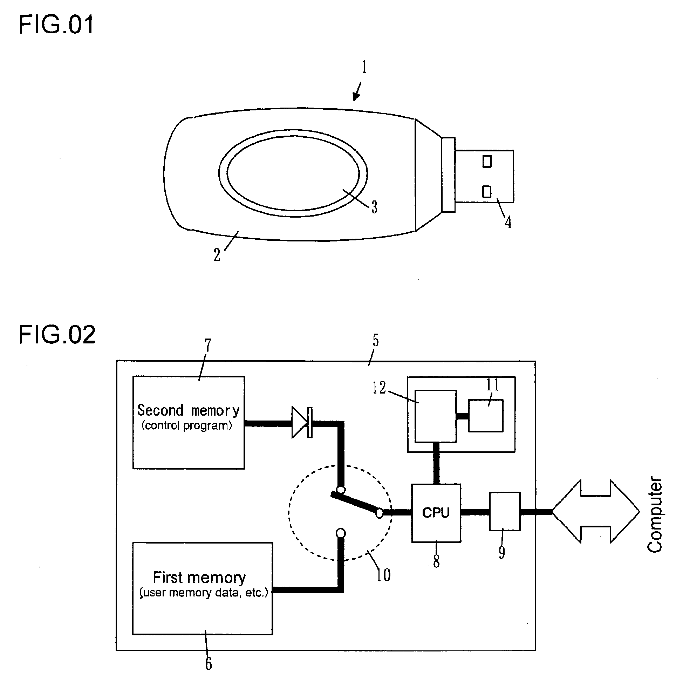

A system according to a first embodiment of the present invention will be explained below according to the drawings. Fig. 1 is an external view showing the appearance of an electronic data management apparatus 1 according to the first embodiment of the present invention. A user uses the electronic data management apparatus 1 to carry user data, such as user's data and files, with him or her. The user connects the electronic data management apparatus 1 to an electronic computer and performs an operation by reading the user data stored in the electronic data management apparatus 1 from an application program running on the computer.

The user may use the electronic data management apparatus 1 to use user data stored in a certain computer on another computer by recording the data in the apparatus 1 and carrying it to the another computer. A manager may use the electronic data management apparatus 1 as follows. The manager records user data stored in a certain computer into the apparatus 1 and transfers it to an operator. The operator connects the apparatus 1 to another computer to use the user data.

The electronic data management apparatus 1 has mainly two different kinds of data stored therein. One of them is the above-described user data, and another is a control program. The control program is installed in a computer to which the electronic data management apparatus 1 is connected to provide an environment that allows the user to perform an operation by using the user data on the computer. When installed in the computer, the control program supervises the operation of an OS running on the computer and the operation of an application program.

Particularly, when the application program calls the user data stored in the electronic data management apparatus 1 to use it, the control program offers the following functions. The control program supervises the operation of the application program, obtains a history of the application program operation and a history of use of the user data, and a history of files and so forth created by using the user data, and stores the obtained histories in the computer. The control program also has the function of transmitting the stored histories to the electronic data management apparatus 1 or to another computer through a communication line.

These functions enable the user to grasp the utilization conditions of the user data stored in the electronic data management apparatus 1. The control program has the function of limiting or controlling the operation of an OS running on the computer and the functions of an application program. Thus, the control program prevents the user data stored in the electronic data management apparatus 1 from being used for purposes that the user does not intend.

Further, the control program installed in the computer has the function of disappearing automatically. Upon completion of the operation on the computer, the control program disappears automatically. That is, the control program does not remain in the computer. Thus, the first embodiment of the present invention provides the electronic data management apparatus 1 and the control program stored in the apparatus 1. The first embodiment of the present invention provides a system in which the control program is installed in an electronic computer to which the electronic data management apparatus 1 is connected to enable the user to grasp the condition of the user data being used in the computer.

The following is a detailed description of the structure of the electronic data management apparatus 1, the operation of constituent parts of the apparatus 1, the operation of the control program, and the operation and use of the system for electronic data management that comprises the electronic data management apparatus 1 and the control program. The electronic data management apparatus 1 comprises an enclosure 2, a fingerprint information input section 3 provided on one side of the enclosure 2, and a connector 4 connected to the enclosure 2. Fig. 2 illustrates an outline of the configuration of a board 5 housed in the enclosure 2.

On the board 5 are mounted a first memory 6, a second memory 7, a USB (Universal Serial Bus) controller 9, a CPU (Central Processing Unit) 8, etc. The first memory 6 stores user data such as user's data and files. The second memory 7 stores a control program (described later). The USB controller 9 is a program for controlling transmission and reception to and from an electronic computer (not shown) through the connector 4. The CPU 8 controls the whole electronic data management apparatus 1. The fingerprint information input section 3 and the method of recognizing fingerprint information entered through the input section 3 are well-known techniques and do not constitute the gist of the present invention. Therefore, a detailed description thereof is omitted.

The user data and the control program are stored in the first memory 6 and the second memory 7, respectively, which are different memory areas of the electronic data management apparatus 1. The two memory areas are designed to be simultaneously inaccessible from the computer. A switch 10 is controlled by the CPU in the manner of software to control the access from the computer to the first memory 6 and the second memory 7.

When the electronic data management apparatus 1 is connected to the computer and the control program is installed in the computer, the switch 10 is switched from the second memory 7 to the first memory 6 to enable transmission and reception of the user data. Further, an authentication database 11 and an authentication module 12 are disposed on the board 5. The authentication module 12 performs user authentication in association with the fingerprint information input section 3. The authentication database 11 is a memory for a database storing identification data, e.g. fingerprint information, about users who are authorized to use the electronic data management apparatus 1.

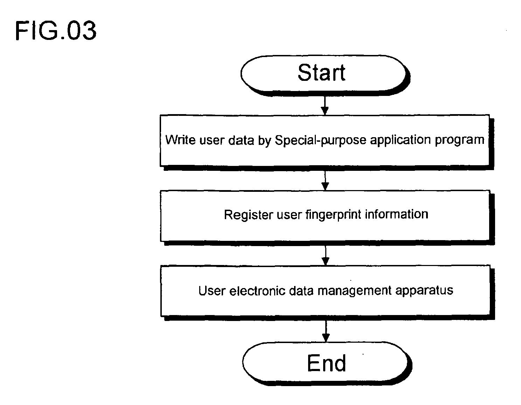

Fig. 3 is a flowchart showing the procedure for recording the identification data into the electronic data management apparatus 1. As shown in Fig. 3, before using the electronic data management apparatus 1, a user or a manager writes user data to the electronic data management apparatus 1 by a special-purpose application program and registers user's fingerprint information. The user or the manager connects the electronic data management apparatus 1 to an electronic computer in which a special-purpose application program for writing user data to the apparatus 1 has been installed, and writes the user data to the first memory 6 of the apparatus 1 by the special-purpose application program (step 1).

Then, the user or the manager registers in the authentication database 11 identification data, e.g. fingerprint information, about users who may use the electronic data management apparatus 1 (step 2). Upon completion of the registration of the identification data, the user or the manager is allowed to remove the electronic data management apparatus 1 from the computer and to carry out the apparatus 1 (step 3). The user data and the user identification data, e.g. fingerprint information, may by managed by using a special-purpose file system.

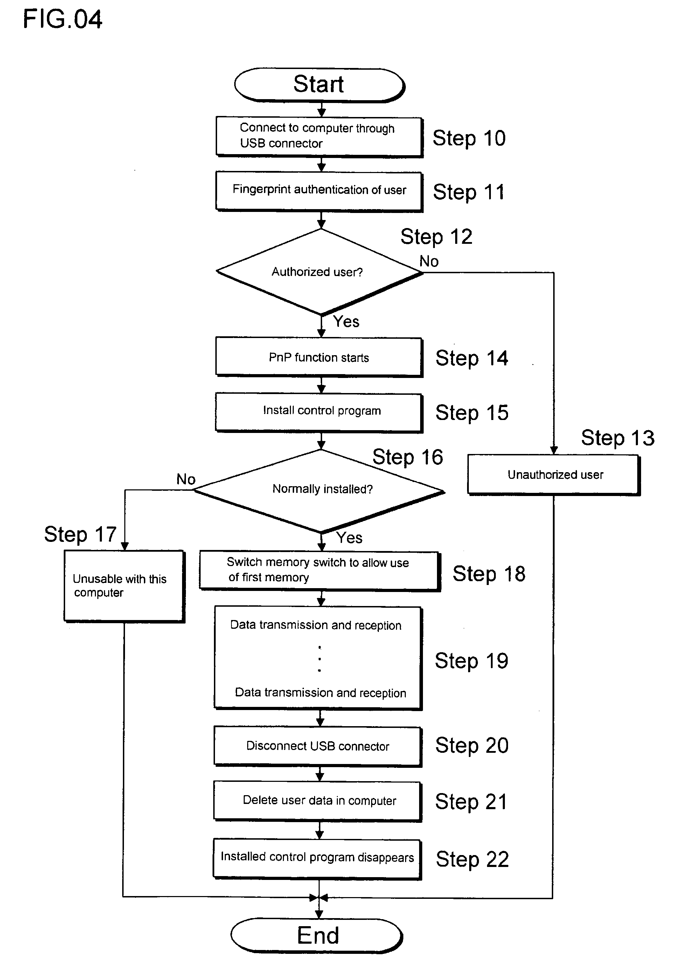

Fig. 4 is a flowchart showing the general flow at the time of using the electronic data management apparatus 1. A user or an operator connects the electronic data management apparatus 1 to an electronic computer by using the USB connector (step 10). The electronic data management apparatus 1 cannot be used immediately after it has been connected to the computer. The electronic data management apparatus 1 has been locked from being either recognized or accessed from the computer even if it is connected to the computer. A user or an operator who wants to use the electronic data management apparatus 1 needs to perform personal authentication (user authentication) to use the user data stored in the apparatus 1.

Personal authentication (user authentication) is performed in the form of fingerprint authentication by the user or the operator by entering fingerprint information through the fingerprint information input section 3. If the personal authentication is successful, the electronic data management apparatus 1 is unlocked. For this purpose, the user or the operator places his or her finger on the fingerprint information input section 3 to perform fingerprint authentication. In other words, the electronic data management apparatus 1 performs fingerprint authentication of the user (step 11). The fingerprint authentication of the user is performed by the authentication module 12 using fingerprint information data from the fingerprint information input section 3.

At this time, the authentication module 12 compares the user's fingerprint information data with the previously registered identification data to judge whether or not "the user is an authorized one" (step 12). If the user's fingerprint information data does not match the identification data stored in the authentication database 11, the authentication module 12 judges that "the user is an unauthorized one". In this case, the user or the operator cannot use the electronic data management apparatus 1 (step 13).

If the user's fingerprint information data matches the data stored in the authentication database 11, the authentication module 12 judges that "the user is an authorized one", and proceeds to the subsequent processing. The authentication module 12 unlocks the electronic data management apparatus 1 to enable processing in which the PnP function of the OS automatically recognizes the electronic data management apparatus 1 connected through the USB connector 4, and the PnP function starts (step 14). The OS recognizes the electronic data management apparatus 1 by the PnP function and enables transmission and reception of data between the computer and the electronic data management apparatus 1. In initialization, the switch 10 is set so that the computer can communicate with the second memory 7. The control program stored in the second memory 7 is installed in the computer (step 15). The control program installed in the computer ensures an environment that allows the user to work using the user data on the computer.

A judgment is made as to whether or not the control program has been normally installed (step 16). There are cases where installation of a program or the like cannot be performed externally, depending on the setting of the computer or the OS running thereon. In such cases, the control program cannot be installed. Therefore, the electronic data management apparatus 1 cannot be used with the computer (step 17).

If the control program has been normally installed in the computer, the switch 10 switches to the first memory 6 to allow the first memory 6 to be used by the computer (step 18). The first memory 6 has user data stored therein. Consequently, it becomes possible to transfer the user data to the computer. It also becomes possible to perform such an operation that the first memory 6 is accessed from an application program on the computer to call the user data (step 19).

At the same time, it becomes possible for the control program installed in the computer to write data such as history information to the first memory 6. The history information may include a history of use of the user data, a history of files created by using the user data, a history of operating the computer, e.g. entry from a keyboard and mouse operation, and a history of data exchange between the computer and a peripheral device using a communication line. When the USB connector 4 is disconnected from the computer (step 20), the control program installed in the computer deletes the user data in the computer (step 21).

At this time, the control program may delete data and files created by using the user data. Then, the control program installed in the computer disappears automatically (step 22). Thus, when the electronic data management apparatus 1 is used, there is no possibility that the user data and files created by using the user data may remain in the computer. The control program may be arranged to record data, e.g. history information, in a storage medium, e.g. a hard disk or a RAM, of a computer on which the control program itself is running and to transfer the recorded data to the first memory 6 or another computer through a network line when a predetermined time has elapsed, or a predetermined amount of data has been recorded. The control program may also write data, e.g. history information, to a recording medium, e.g. an MO, a flexible disk, or a flash memory, connected to the computer.

To use the electronic data management apparatus 1, a user or a manager registers in the authentication database 11 identification data about users who are authorized to use the electronic data management apparatus 1 in advance. The data in the electronic data management apparatus 1 is inaccessible through an ordinary interface. Access to the electronic data management apparatus 1 has been locked, so that only an authorized user can use the electronic data management apparatus 1 after user authentication has been performed normally. At this time, access to the electronic data management apparatus 1 is unlocked to allow access and connection of the connector to the computer.

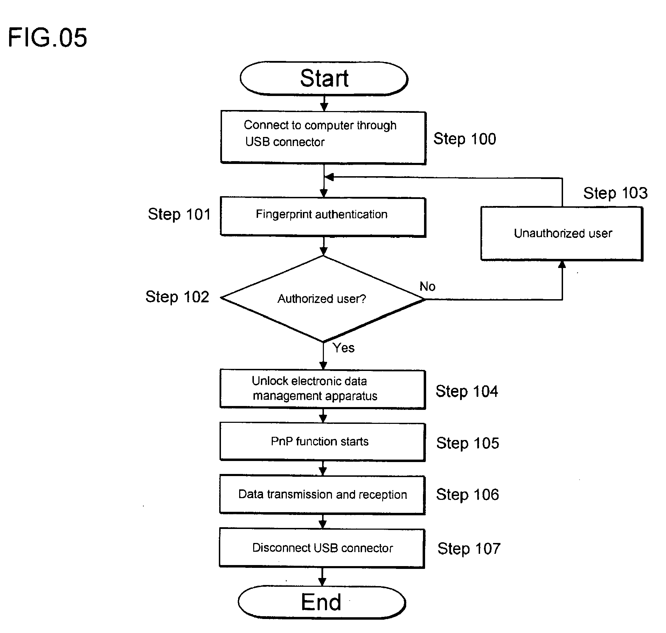

[Second Embodiment]
Fig. 5 is a flowchart showing an outline of the operation of a system according to a second embodiment of the present invention. The second embodiment of the present invention is basically the same as the above-described first embodiment of the present invention. Only functions and processing of the second embodiment that are different from those of the first embodiment of the present invention will be explained below.
A user or an operator connects the electronic data management apparatus 1, in which user data and identification data, e.g. fingerprint information, about users have been registered, to an electronic computer to be used (step 100). The authentication module 12 authenticates the user by using fingerprint information data from the fingerprint information input section 3 (step 101). The authentication module 12 compares the user's fingerprint information data with the identification data previously registered in the electronic data management apparatus 1 to judge whether or not the user is an authorized one (step 102).

If the user's fingerprint information data does not match the identification data stored in the authentication database 11, the authentication module 12 judges that the user is an unauthorized one, and performs user authentication again (step 103). This processing continues until the electronic data management apparatus 1 is disconnected from the computer, or until user authentication is successful. If the user's fingerprint information data matches the identification data stored in the authentication database 11, the authentication module 12 judges the user is an authorized one, and proceeds to the subsequent processing.

The authentication module 12 unlocks the electronic data management apparatus 1 (step 104) to enable the PnP function, and the PnP function starts (step 105). The computer automatically recognizes the electronic data management apparatus 1 by using the PnP function. Upon completion of the automatic recognition of the electronic data management apparatus 1 by the computer, it becomes possible to access the apparatus 1 in the same way as in the case of an ordinary external memory (step 106).

When the USB connector of the electronic data management apparatus 1 is disconnected from the computer (step 107), transmission and reception of a series of data between the computer and the electronic data management apparatus 1 end. In the second embodiment, there is no particular limitation on the data transferred and written to the computer. The user records user data in the electronic data management apparatus 1 and carries out the apparatus 1. The electronic data management apparatus 1 is unlocked after the user has been authenticated to be authorized to access the apparatus 1 to permit the user to access only the user data recorded in the electronic data management apparatus 1.

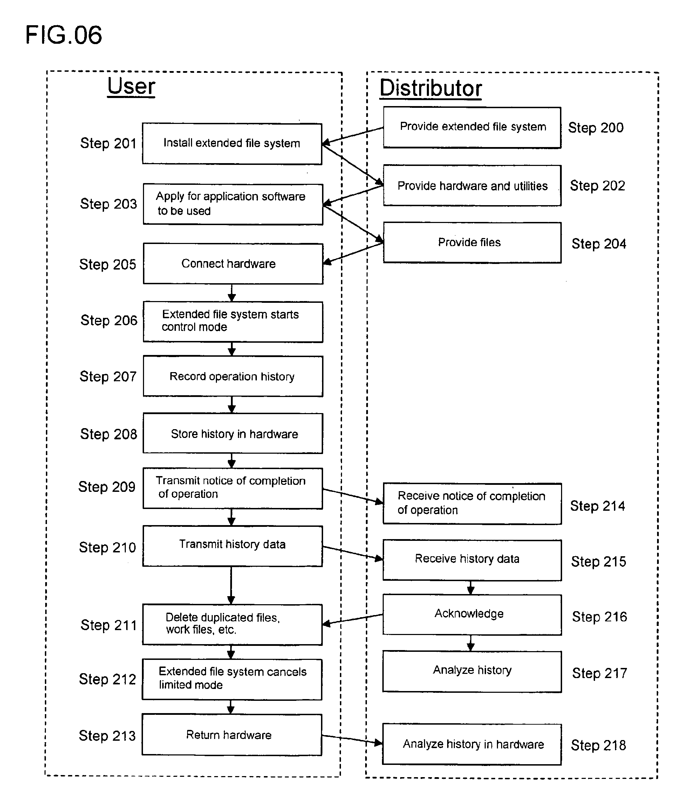

[Third Embodiment]
Fig. 6 shows an outline of the operation of a system according to a third embodiment of the present invention. The system according to the third embodiment of the present invention is basically the same as the systems according to the above-described first and second embodiments of the present invention. Only functions and processing of the system according to the third embodiment that are different from those of the systems according to the first and second embodiments of the present invention will be explained below. The third embodiment relates to a system including a distributor and a user. The user performs an operation using data provided by the distributor and reports the result of the operation to the distributor. The distributor also provides an environment in which the data provided by the distributor is usable only in a specific limited range designated by the distributor.

Fig. 6 shows the flow of exchange between the distributor providing the electronic data management apparatus 1 (hereinafter referred to as "hardware") and a user who uses the hardware. The distributor provides an extended file system, which is a file system with extended functions (step 200).

The extended file system has the function of obtaining and recording histories such as a history of application programs used by the user, histories of reading, editing and writing data, and histories of reading, writing, duplicating, creating and deleting files. The extended file system also has the function of limiting functions provided by the file system of the computer. Further, the extended file system has the function of obtaining a history of user's keyboard entry and a history of user's mouse operation, e.g. mouse click.

The user installs the extended file system (step 201). The installation of the extended file system is carried out in the form of application for the installation made from the user to the distributor. The distributor provides hardware (step 202). At the same time, utilities that run in association with the hardware may be provided. The provision of the extended file system and the utilities is normally performed by storing them in a recording medium, e.g. a CD. The user makes application for an application program to be used to the distributor (step 203). The distributor provides the user with files and data unique to the hardware with respect to the application program (step 204).

The files and data unique to the hardware with respect to the application program have been stored in the hardware. The application filed from the user to the distributor to install the extended file system and to gain authorization to use the application program and so forth may be made online from the distributor's home page through the Internet. The application may also be made in the form of an E-mail or a paper medium to exhibit the same effect.

The user installs the extended file system and the utilities in the computer and connects the received hardware to the computer (step 205). When the hardware has been connected to the computer, the extended file system recognizes the hardware and enters into a control mode (step 206). Information concerning the control mode is included in the files unique to the hardware provided by the distributor.

The user performs operations by using the data provided by the distributor. A history of these operations is recorded (step 207). The file use history is recorded in the hardware (step 208). Upon completion of the operations, the user transmits a notice of "Completion of Operation" to the distributor (step 209). The distributor receives the notice of "Completion of Operation" (step 214).

Further, the user transmits history data to the distributor (step 210). The distributor receives the history data (step 215), and acknowledges the reception of the history data (step 216). Upon reception of the acknowledgement, the extended file system deletes duplicated files, work files, and data concerning these files (step 211). Then, the extended file system cancels the limited mode to enter into the mode of the normal file system (step 212).

Upon completion of these series of operations, the user returns the hardware to the distributor (step 213). The distributor analyzes the received history data (step 217). Thus, the distributor can grasp whether or not the user correctly used the provided files and data. It is also possible for the distributor to grasp whether or not the user correctly used the provided files and data by analyzing the history data stored in the hardware returned (step 218).

The notice to the distributor and the acknowledgement from the distributor are transmitted directly through a communication line, e.g. the Internet. Transmission of the history data and so forth from the user to the distributor is made through a communication network, e.g. a special-purpose communication line, the Internet, or a public communication network. If the user and the distributor are not connected through a communication network, the history data and so forth may be transferred by storing the data in the hardware and returning the hardware to the distributor.

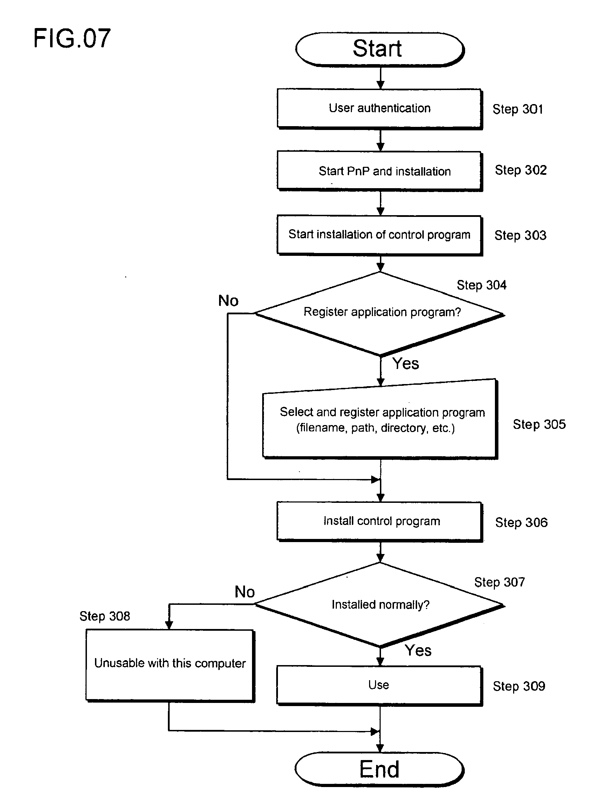

[Fourth Embodiment]
Fig. 7 shows an outline of the functions of a system according to a fourth embodiment. The system according to the fourth embodiment of the present invention is basically the same as the systems according to the first to third embodiments of the present invention. Only functions and processing of the system according to the fourth embodiment that are different from those of the systems according to the first to third embodiments of the present invention will be explained below. In the system according to the fourth embodiment, when the control program is installed in the computer, the user can register an application program to be used.

When installing the control program, the user can register an application program and specific data and specific files, obtain a history of use of the registered application program and specific data and files, and limit the usable range of the registered application program. The user can grasp the use history of the application program by tracing it.

The user connects the electronic data management apparatus 1 to an electronic computer. Then, user authentication is performed (step 301). Upon completion of the user authentication, access to the electronic data management apparatus 1 is unlocked to allow exchange between the computer and the apparatus 1, and the PnP function of the OS becomes effective. Consequently, the electronic data management apparatus 1 is recognized by the computer through the PnP function, and installation of the driver of the apparatus 1 is started (step 302). Upon completion of the installation of the driver of the electronic data management apparatus 1, installation of the control program is started (303).

At this time, the user can register an application program (step 304). If the user does not want to register an application program, the installation of the control program proceeds (step 306). If the user wants to register an application program, he or she selects the application program to be registered and registers it by designating and selecting the filename, path, directory and so forth of the program (step 305).

Upon completion of the application program registration, the installation of the control program proceeds (step 306). After it is confirmed that the control program has normally been installed, it becomes possible to use the electronic data management apparatus 1 (steps 307, 308 and 309).

When installing the control program, the user can register an application program, obtain a history of use of the registered application program, and limit the usable range of the registered application program, as has been stated above. Specific data and specific files may be registered in addition to the application program. If data and files are registered, it is possible to grasp the history of use of the data and files by tracing it as in the case of the system according to the first embodiment. The user can register an application program, data and files and cancel the registration even during the use of the control program.

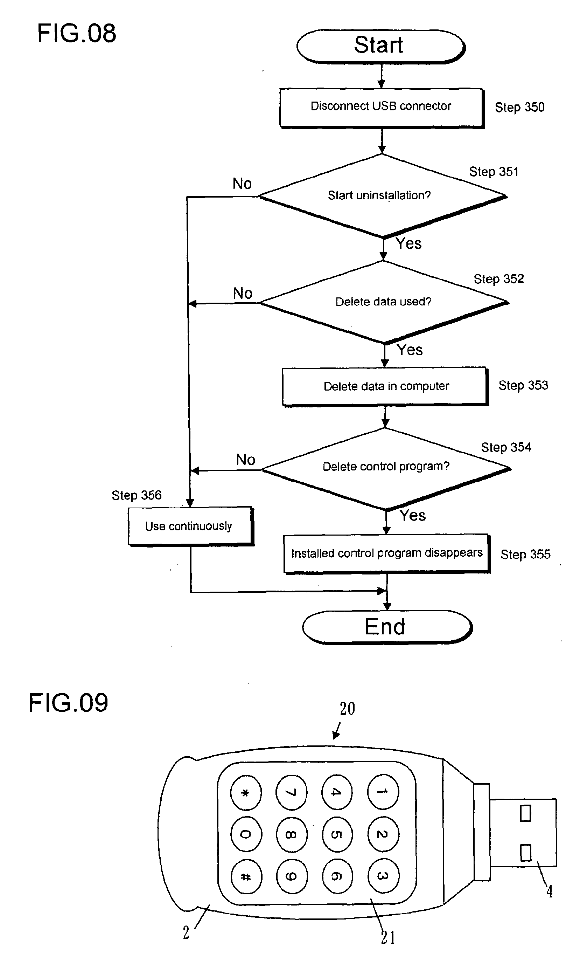

[Fifth Embodiment]
Fig. 8 shows an outline of the operation of a system according to a fifth embodiment of the present invention. The system according to the fifth embodiment of the present invention is basically the same as the systems according to the above-described first to fourth embodiments of the present invention. Only functions and processing of the system according to the fifth embodiment that are different from those of the systems according to the first to fourth embodiments of the present invention will be explained below. In the system according to the fifth embodiment, the control program can be used continuously even if the electronic data management apparatus 1 is disconnected from the computer. The electronic data management apparatus 1 is connected to an electronic computer, and the control program in the apparatus 1 is installed in the computer. In this state, the electronic data management apparatus 1 is used as in the case of the systems according to the first to fourth embodiments.

The USB connector is disconnected from the computer (step 350). At this time, the user is asked whether or not to start uninstallation of the control program (step 351). If the control program is not to be uninstalled, the electronic data management apparatus 1 can be used continuously (step 356). When reconnecting the electronic data management apparatus 1 to the computer, the user need not reinstall the control program because the environment before the disconnection of the apparatus 1 remains in the computer. If uninstallation of the control program is to be started, the user is asked whether or not to delete data used so far (step 352), and the data in the computer is deleted (step 353). Then, the user is asked whether or not to delete the control program itself (step 354).

If the data or the control program is not to be deleted, the electronic data management apparatus 1 is used continuously (step 356). If the control program is deleted, however, the electronic data management apparatus 1 cannot be used continuously (step 355). That the electronic data management apparatus 1 is used continuously means that the apparatus 1 can be used by reconnecting it to the computer. When the electronic data management apparatus 1 is reconnected to the computer, the control program already installed can be used continuously.

[Sixth Embodiment]
A sixth embodiment is another embodiment of the electronic data management apparatus 1. An electronic data management apparatus 20 according to the sixth embodiment of the present invention is basically the same as the electronic data management apparatus 1 used in the systems according to the above-described first to fifth embodiments of the present invention. Only functions and processing of the electronic data management apparatus 20 that are different from those of the electronic data management apparatus 1 in the first to fifth embodiments of the present invention will be explained below. Fig. 9 shows an outline of the electronic data management apparatus 20 according to the sixth embodiment. The electronic data management apparatus 20 comprises an enclosure 2, pushbutton-type keys 21 provided on one side of the enclosure 2, and a connector 4.

The electronic data management apparatus 20 differs from the electronic data management apparatus 1 used in the first to fifth embodiments in that the apparatus 20 uses a personal identification number for user authentication. The other functions of the apparatus 20 are the same as those of the above-described electronic data management apparatus 1. Therefore, a detailed description thereof is omitted. Only the part of the electronic data management apparatus 20 in which it differs from the electronic data management apparatus 1 will be explained below. To unlock the electronic data management apparatus 20, the user enters his or her personal identification number from the pushbutton-type keys 21 provided on one side of the apparatus 20.

Predetermined symbol keys, e.g. "#" and "*", may be pressed before and after the personal identification number is entered to identify the start and end of the entry of the identification number. The pushbutton-type keys 21 have numeral buttons from 0 to 9 and some symbol buttons. The number of buttons, however, may be increased or decreased according to the size of the electronic data management apparatus 20 and the use application.

The internal structure of the electronic data management apparatus 20 is the same as that shown in Fig. 2. User authentication is performed by the authentication module 12. For the authentication, a previously registered personal identification number has been stored in the authentication database 11.

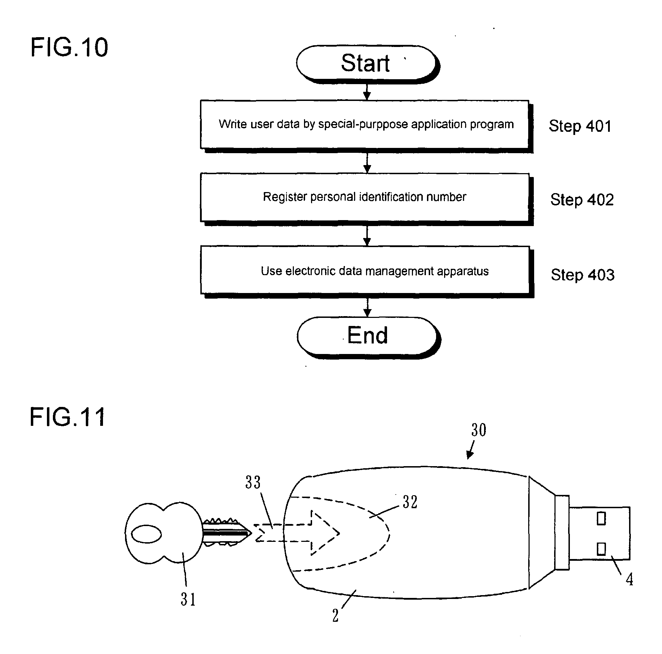

The procedure taken until the electronic data management apparatus 20 becomes usable is shown in the flowchart of Fig. 10. User data is written to the first memory 6 of the electronic data management apparatus 20 by a special-purpose application program, and the user's personal identification number is registered in the authentication database 11 (steps 401 and 402). Consequently, the electronic data management apparatus 20 becomes usable.

[Seventh Embodiment]
A seventh embodiment is another embodiment of the electronic data management apparatus 1. An electronic data management apparatus 30 according to the seventh embodiment of the present invention is basically the same as the electronic data management apparatus 1 used in the systems according to the above-described first to fifth embodiments of the present invention or the electronic data management apparatus 20. Only functions and processing of the seventh embodiment that are different from those of the systems according to the first to fifth embodiments of the present invention will be explained below. Fig. 11 is an external view showing the appearance of the electronic data management apparatus 30 according to the seventh embodiment. The figure shows an outline of the electronic data management apparatus 30 that performs user authentication using a combination of a lock 32 and a key 31. The electronic data management apparatus 30 comprises an enclosure 2, a lock 32 provided on one side of the enclosure 2, and a connector 4.

The electronic data management apparatus 30 uses a mechanical lock that has been conventionally used. That is, a combination of a lock 32 and a key 31 for closing and opening the lock 32 is attached to the electronic data management apparatus 30. If an authorized key 31 is inserted into the lock 32 and turned, this is electrically detected through contacts or the like, and the user is recognized as an authorized one. The internal structure of the electronic data management apparatus 30 is the same as that shown in Fig. 2. User authentication is performed by the authentication module 12. Because user authentication is performed according to whether or not the lock 32 is opened, the authentication database 11 is not needed. The electronic data management apparatus 30 differs from the electronic data management apparatus 1 used in the first to fifth embodiments in that the apparatus 30 uses a combination of the lock 32 and the key 31 for user authentication. The other functions of the electronic data management apparatus 30 are the same as those of the above-described electronic data management apparatus 1. Therefore, a detailed description thereof is omitted. Only the part of the electronic data management apparatus 30 in which it differs from the electronic data management apparatus 1 will be explained.

To unlock the electronic data management apparatus 30, the user inserts the key 31 into the lock 32 provided on one side of the apparatus 30 as shown by the direction of the arrow 33 to unlock the lock 32. The authentication module 12 senses information about the fact that the lock 32 is unlocked, and unlocks the electronic data management apparatus 30 to permit access to the apparatus 30.

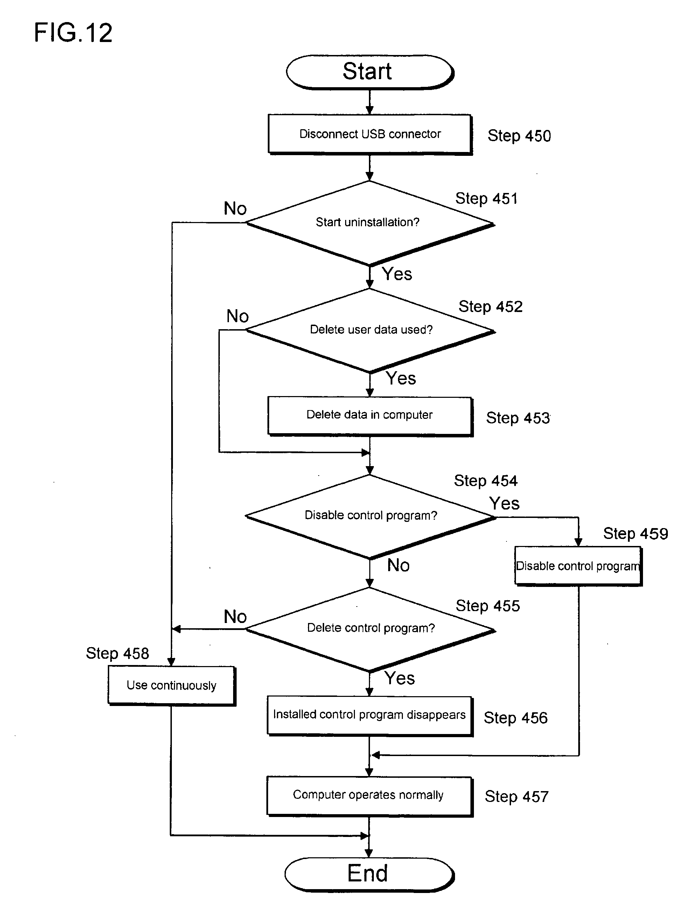

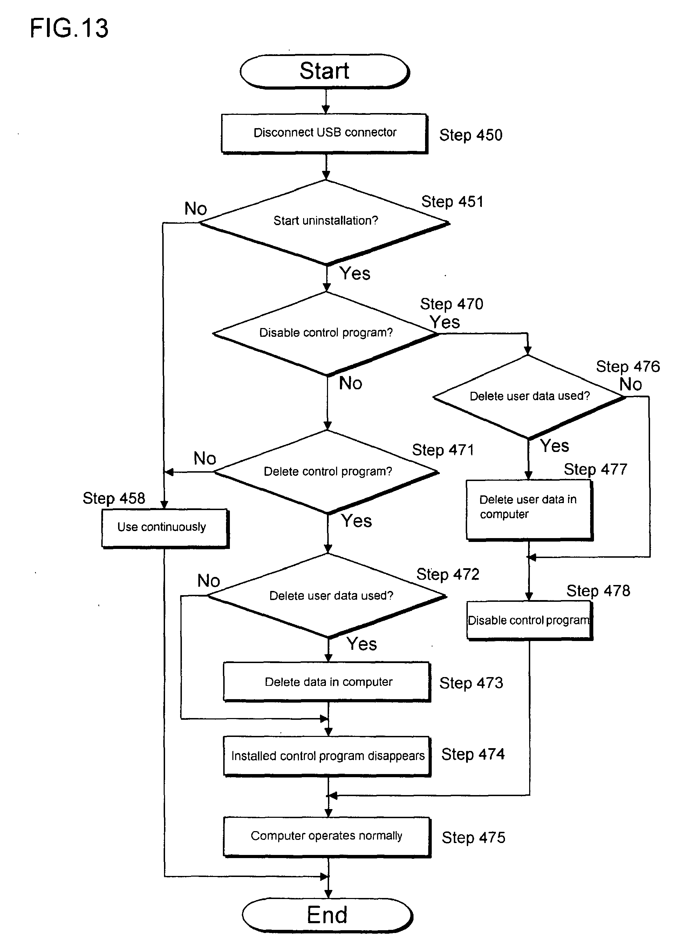

[Eighth Embodiment]
Figs. 12 and 13 show an outline of the operation of a system according to an eighth embodiment of the present invention. The eighth embodiment of the present invention is basically the same as the systems according to the above-described first to fifth embodiments of the present invention. Only functions and processing of the system according to the eighth embodiment that are different from those of the systems according to the first and fifth embodiments of the present invention will be explained below. In the system according to the eighth embodiment, the control program can be used continuously even if the electronic data management apparatus 1 is disconnected from the computer.

The electronic data management apparatus 1 is connected to an electronic computer, and the control program in the apparatus 1 is installed in the computer. In this state, the electronic data management apparatus 1 is used as in the case of the systems according to the first to fifth embodiments. As shown in the flowchart of Fig. 12, the USB connector 4 is disconnected from the computer (step 450). At this time, the user is asked whether or not to start uninstallation (step 451). If uninstallation is not to be made, the electronic data management apparatus 1 can be used continuously (step 458). When reconnecting the electronic data management apparatus 1 to the computer, the user need not reinstall the control program because the environment before the disconnection of the apparatus 1 remains in the computer.

If uninstallation of the control program is to be started, the user is asked whether or not to delete the user data used so far (step 452), and the control program deletes the user data in the computer (step 453). If the user data is not to be deleted, step 453 is skipped (step 458). Then, the user is asked whether or not to disable the control program (step 454).

If the control program is to be disabled, a control program disabling operation is performed (step 459). Consequently, the control program is disabled, and the computer is allowed to operate normally (step 457). In other words, the control program is made ineffective although it has been installed. If the control program is not to be disabled, the user is asked whether or not to delete the control program itself (step 455). If the control program is not to be deleted, it is used continuously (step 458).

If the control program is deleted, the computer is allowed to operate normally (step 457). If the electronic data management apparatus 1 is to be used continuously, it is reconnected to the computer, thereby enabling the apparatus 1 to be used. In this case, the control program already installed can be used continuously.

The flowchart of Fig. 12 shows another example in which the user is asked whether or not to delete the user data used (step 452) and asked whether or not to disable the control program (step 454). The processing steps with the same step numbers as in Fig. 12 have been explained above. Therefore, a description thereof is omitted hereinbelow. In Fig. 13, the user is asked whether or not to delete the user data used (steps 476 and 472) after being asked whether or not to disable the control program (step 470) and after being asked whether or not to delete the control program (step 471).

After the user has been asked whether or not to delete the user data used (steps 476 and 472) or after the user data has been deleted (steps 477 and 473), disabling of the control program (step 478) and deletion of the control program (step 471) are executed. The eighth embodiment of the present invention is based on the premise that it performs user authentication based on the user's fingerprint as in the systems according to the first to fifth embodiments of the present invention. It is, however, also possible to perform user authentication as shown in the sixth and seventh embodiments of the present invention.

The embodiments of the present invention are applicable not only to the systems according to the first to eighth embodiments described above but also to systems of any type and any form with which similar advantageous effects are obtainable.

### Industrial Applicability:

The present invention enables a user's files and data to be recorded and carried in a portable memory device for use. The present invention is preferably used in industries requiring security. It is particularly desirable to use the present invention in printing industries and shops where it is necessary to provide confidential information, e.g. user data and files, in business or accounting data processing. The present invention may also be used to provide files to organizations or clients to perform paperless processing. The present invention may also be used to perform electronic content delivery services, e.g. music delivery service, image delivery service, and electronic publishing. That is, the present invention may be used to provide electronic contents by specifying a recipient and writing the electronic contents to the recipient's memory.

### Brief Description of the Drawings:

[Fig. 1] Fig. 1 is an external view showing the appearance of an electronic data management apparatus 1.
[Fig. 2] Fig. 2 is a functional diagram showing an arrangement on a board 5 of the electronic data management apparatus 1.
[Fig. 3] Fig. 3 is a flowchart showing a preparation procedure carried out before the use of the electronic data management apparatus 1.
[Fig. 4] Fig. 4 is a flowchart showing the general flow of using the electronic data management apparatus 1.
[Fig. 5] Fig. 5 is a flowchart showing an outline of the operation of a system according to a second embodiment of the present invention.
[Fig. 6] Fig. 6 is a flowchart showing an outline of the operation of a system according to a third embodiment of the present invention.
[Fig. 7] Fig. 7 is a flowchart showing an outline of the operation of a system according to a fourth embodiment of the present invention.
[Fig. 8] Fig. 8 is a flowchart showing an outline of the operation of a system according to a fifth embodiment of the present invention.
[Fig. 9] Fig. 9 is an external view showing the appearance of an electronic data management apparatus 20 according to a sixth embodiment that performs authentication using a personal identification number.
[Fig. 10] Fig. 10 is a flowchart showing a preparation procedure to use the electronic data management apparatus 20.
[Fig. 11] Fig. 11 is an external view showing the appearance of an electronic data management apparatus 30 according to a seventh embodiment that performs authentication using a key.
[Fig. 12] Fig. 12 is a flowchart showing an outline of the operation of a system according to an eighth embodiment of the present invention.
[Fig. 13] Fig. 13 is a flowchart showing another example of the operation of the system according to the eighth embodiment of the present invention.

### Explanation of Reference Symbols:

1···electronic data management apparatus
2···enclosure
3···fingerprint authentication section
4···USB connector
5···board
6···first memory
7···second memory
8···CPU
9···bus controller
10···switch
11···fingerprint authentication database
12···fingerprint authentication section
20...electronic data management apparatus
21···pushbutton-type input section
30···electronic data management apparatus
31···key
32...lock

## Claims

1. An electronic data management apparatus (1, 20, 30) comprising:
data storing means (6) storing data;
identification data storing means (11) having identification data for authentication registered therein;
input means (3, 21, 31, 32) for entering authentication information about a user;
authentication means (12) performing authentication of said user by comparing data entered from said input means (3, 21, 31, 32) with said identification data registered in said identification data storing means (11); and
interface means (9) connected to an electronic computer to transmit and receive said data;
wherein access to said data is permitted when said entered data and said identification data match each other as a result of said authentication;
said electronic data management apparatus further comprising:
program storing means (7) storing a control program;
wherein after said user has been authenticated by said authentication means (12), said control program is installed in said computer to enable reading said data from said computer.

2. An electronic data management apparatus according to claim 1, wherein said control program unlocks said electronic data management apparatus (1, 20, 30) upon completion of said authentication by said authentication means (12), and allows said computer connected thereto to start automatic recognition of said electronic data management apparatus (1, 20, 30).

3. An electronic data management apparatus according to claim 1, further comprising:
switch control means (10) selectively switching between said data storing means (6) and said program storing means (7).

4. An electronic data management apparatus according to claim 1 or 3, wherein writing to said data storing means (6) can be performed from said computer, and a history of handling said data on said computer or a history of operating said computer to handle said data is written to said data storing means (6) by said control program.

5. An electronic data management apparatus according to claim 1 or 2, wherein said identification data is fingerprint data, wherein fingerprint information about said user is entered from said input means (3), and said authentication means (12) performs fingerprint authentication of said user.

6. An electronic data management apparatus according to claim 1 or 2, wherein said identification data is a registered personal identification number, wherein a personal identification number is entered from said input means (21), and said authentication means (12) authenticates said user by comparing said personal identification number with said registered personal identification number.

7. An electronic data management apparatus according to claim 1 or 2, wherein said authentication means (12) has a mechanical lock (32) and a key (31), so that said user having said key (31) is permitted to access said data.

8. A control program for use with an electronic data management apparatus, said electronic data management apparatus having:
an authentication information storing area (11) that stores registered authentication information;
an input section (3, 21, 31, 32) for entering identification information about a user;
an authentication section (12) having an authentication function of performing authentication of said user by comparing said authentication information and said identification information with each other;
a data storing area (6) that stores data; and
a program storing area (7) that stores a control program;
wherein when said electronic data management apparatus is connected to an electronic computer, said authentication section (12) performs said authentication of said user, and upon completion of said authentication, said user is permitted to access said data storing area (11);
said control program being installed in said computer after said authentication has been performed;
wherein when an operation is performed on said computer by using said data, said control program operates said computer so as to store a history of said operation.

9. A control program for use with an electronic data management apparatus according to claim 8, wherein when said electronic data management apparatus is disconnected from said computer, said control program deletes said data transmitted into said computer.

10. A control program for use with an electronic data management apparatus according to claim 9, which incorporates an automatic disappearance program having a function of causing said control program to disappear automatically when said electronic data management apparatus is disconnected from said computer.

11. A control program for use with an electronic data management apparatus according to claim 8 or 9, which has a function of becoming disabled from operating in said computer.

12. A control program for use with an electronic data management apparatus according to claim 8, which has:
a history obtaining function of obtaining at least one history selected from histories of duplicating, deleting, editing, viewing, reading and writing said data on said computer, or a history of files or new data created by using said data;
a data recording function of writing said history to said data storing area (6); and
a transmission function of transmitting said history by using communication means.

13. A control program for use with an electronic data management apparatus according to claim 8 or 12, wherein said history is an operation history of operating from input means of said computer.

14. A control program for use with an electronic data management apparatus according to claim 8, which limits a file system of said computer so as to permit only at least one operation selected from duplicating, deleting, editing, viewing, reading and writing said data on said computer by a specific application program or arbitrarily.

15. A control program for use with an electronic data management apparatus according to claim 8, which runs in a kernel mode in which all instructions of an OS of said computer are executable.

16. An electronic data management method using an electronic data management apparatus (1, 20, 30), said electronic data management apparatus having:
an authentication information storing section (11) that stores authentication information;
an input section (3, 21, 31, 32) for entering authentication information about a user;
an authentication section (12) that performs authentication of said user by using data from said input section (3, 21, 31, 32); and
a data storing section (6) that stores data;
wherein when said electronic data management apparatus is connected to an electronic computer, said authentication section (12) performs said authentication of said user, and said user having said authentication information matching said authentication information registered in said authentication information storing section (11) is permitted to access said data;
wherein said electronic data management apparatus has a program storing section (7) that stores a control program, and upon completion of said authentication, said control program is installed in said computer to ensure a use environment in which said data is used in said computer.

17. An electronic data management method according to claim 16, wherein said use environment is a limitation that permits access to said data only from a specific application program that runs on said computer.

18. An electronic data management method according to claim 16, wherein said control program has a function of leaving a history of operating from input means of said computer, or a history of access to said data in at least one operation selected from duplicating, deleting, editing, viewing, reading and writing operations using said data, or a history of files or new data created by using said data.

19. An electronic data management method according to claim 16, wherein when said electronic data management apparatus (1, 20, 30) is disconnected from said computer, said control program deletes at least one of said data in said computer, duplicates of said data, and data or files created by using said data.

20. An electronic data management method according to any one of claims 16, 18 and 19, wherein said control program incorporates an automatic disappearance program having a function of causing said control program to disappear automatically.

21. An electronic data management method according to any one of claims 16, 18 and 19, wherein said control program has a function of becoming disabled from functioning in said computer.
